# EUROPÄISCHE PATENTSCHRIFT

(11) **EP 1 217 052 B1**
(45) Veröffentlichungstag und Bekanntmachung des Hinweises auf die Patenterteilung: **26.10.2005**
(21) Anmeldenummer: 01130724.6
(22) Anmeldetag: 21.12.2001
(51) Int. Cl.: C09J 4/00, C09J 183/00

(54) **Kaschierklebemassen mit Barriereeigenschaften gegenüber Gasen und Dämpfen**
Laminating adhesive composition having barrier properties for gases and vapors
Compositions pour couches adhésives ayant des propriétés de barrière pour gaz et vapeurs

(30) Priorität: 22.12.2000 DE 10064573; 06.08.2001 DE 10138423
(43) Veröffentlichungstag der Anmeldung: 26.06.2002
(73) Patentinhaber: Fraunhofer-Gesellschaft zur Förderung der angewandten Forschung e.V., 80686 München (DE)
(72) Erfinder: Amberg-Schwab, Sabine, 97250 Erlabrunn (DE); Katschorek, Haymo, 97204 Höchberg (DE); Burger, Annette, 97080 Würzburg (DE)

(56) Entgegenhaltungen:
- EP-A- 0 909 787
- WO-A-00/44825
- WO-A-93/11190
- US-A- 5 747 560
- US-A- 6 013 128
- US-A- 6 087 016

## Beschreibung

Die vorliegende Erfindung betrifft Kaschierklebemassen auf der Basis von anorganisch-organischen Hybrid-Polymeren mit kovalent gebundenen, organomodifizierten Füllstoffen zur Verbesserung der Barrierewirkung z. B. gegenüber Gasen und Dämpfen.

Anorganisch-organische Hybridpolymere, die ein Netzwerk von hydrolysierten, kondensierten Silanen enthalten, sind unter dem Namen ORMOCERe® bekannt (ORMOCERe® ist eine eingetragene Marke der Fraunhofer Gesellschaft für angewandte Forschung). Die Silicium-Atome solcher Polymere können teilweise durch andere Metalle wie Titan, Aluminium, Zirkon o.ä ersetzt sein. Die als Ausgangsmaterialien eingesetzten Silane sowie die ggf. weiterhin eingesetzten Metallverbindungen enthalten hydrolysierbare Gruppen wie Alkoxide, Halogenide, Hydroxygruppen o.ä. Zumindest die oder ein Teil der Silane weisen weiterhin organische Gruppen auf, die entweder als Netzwerkwandler und/oder als Netzwerkbildner fungieren können. Beispiele für Netzwerkwandler sind Alkyl- oder Arylgruppen, während die Netzwerkbildner in der Regel organisch polymerisierbare Gruppen enthalten wie z.B. Vinylgruppen, Glycidylgruppen, (Meth)Acrylatgruppen o.ä.. Das Netzwerk wird durch Hydrolyse und Kondensation der anorganisch reaktiven Gruppen erzeugt; sofern Netzwerkbildner vorhanden sind, kann es durch organische Polymerisation der organisch reaktiven Gruppen verstärkt sein. Das anorganische Netzwerk verleiht den Polymeren Eigenschaften wie Härte oder thermische Stabilität; das organische Netzwerk ist z.B. für die elastischen Eigenschaften verantwortlich. Auch Eigenschaften wie z.B. der thermische Ausdehnungskoeffizient werden durch das Verhältnis von anorganischem zu organischem Vernetzungsgrad beeinflußt. Nachstehend werden die oben beschriebenen Polymere häufig als "anorganisch-organische Hybridpolymere" bezeichnet.

Beschichtungsmaterialien auf ORMOCER®-Basis sind bekannt, siehe z.B. S. Amberg-Schwab, M. Hoffmann, H. Bader, Kunststoffe 86 (1996) 660-664, S. Amberg-Schwab, M. Hoffmann, H. Bader, M. Gessler, J. of Sol-Gel Sci. Technol. 1/2, 141 (1998) oder M. Hoffmann, S. Amberg-Schwab, Barrier Properties of Inorganic Polymers, Mater. Res. Soc. Symp. Proc. 519, 309 (1998).

Die Beschichtungen werden hergestellt, indem die Ausgangsmaterialien mit Hilfe eines Sol-Gel-Verfahrens in einem Lösungsmittel gelöst und hydrolysiert werden, wobei die Silane untereinander und ggf. unter Einbau weiterer Metall-Kationen und/oder anderer Komponenten kondensieren. Anschließend wird bei Bedarf durch Zusatz weiteren Lösungsmittels oder durch Abdampfen eines Teils des Lösungsmittels die gewünschte Viskosität des Materials eingestellt, um eine gute Verarbeitbarkeit zu gewährleisten. Wenn die Schicht erzeugt ist, wird überschüssiges Lösungsmittel durch Trocknen oder Erwärmen entfernt. Sofern das Material organisch polymerisierbare Gruppen enthält, werden diese meist erst nach dem Beschichtungsschritt zur Polymerisation gebracht. Durch Entfernen des Lösungsmittels und ggf. durch die organische Polymerisation erhält die Beschichtung die erforderliche und gewünschte Härte. So werden Beschichtungen aus den genannten Polymeren häufig als kratzfeste Topcoats oder Überschichtungen sensiblerer Zwischenschichten verwendet.

Beschichtungsmaterialien können sehr gute Barriere-Eigenschaften gegenüber Gasen und Dämpfen aufweisen. Auf SiOₓ-bedampftem BOPP (biaxial orientiertem Polypropylen) konnten z. B. Sauerstoffbarrierewerte von <0,05 cm³/m²*d (DIN 53380, 23°C, 50 % r. F.)erreicht werden; auf BOPP ohne SiOₓ-Bedampfung werden Werte von ca. 25 cm³/m²*d (DIN 53380, 23°C, 50 % r. F.) erreicht (unbeschichtete BOPP-Referenzfolie: 1600 cm³/m²*d). Für Wasserdampf liegen die Barrierewerte für bedampfte Polymerfolien ebenfalls im Hochbarrierebereich. Für unbedampfte Polymerfolien, z. B. PET oder BOPP, ist durch die Verwendung von ORMOCER®-Schichten ein geringerer Effekt bzgl. der Wasserdampfbarriere meßbar.

Es ist auch bereits vorgeschlagen worden, verschiedene Beschichtungsmaterialien, darunter solche auf ORMOCER®-Basis, zur Erzeugung oder Verbesserung von Barriere-Wirkungen mit geeigneten zusätzlichen Schichten oder mit ggf. funktionell modifizierten Füllstoffen zu versehen. So beschreiben die US-Patentschrift 4,944,964 und die EP-Anmeldung mit der Veröffentlichungs-Nr. 185893 einen Lack aus Kieselsäureheteropolykondensat, einem plättchen- oder lamellenförmigen Füllstoff, einem Lösungsmittel sowie ggf. einem üblichen synthetischen Harz, der insbesondere Glasoberflächen vor Korrosion schützen soll. Der Füllstoff kann aus Glas oder Feinglimmer bestehen. Füllstoffhaltige ORMOCER®-Komposite für Beschichtungen mit Sperreigenschaften gegenüber Wasserdampf nennt die WO 93/25605. Als Füllstoffe werden Luzenac Talk, Glass Fasern, Tone, calzinierte Tone, Aerosil u.ä. genannt. Die US 6,013,128 beschreibt die Einbettung von ausgewählten Schichtsilikaten in wäßrige, ionische Polysilikatlösungen zur Herstellung von Barriere-Beschichtungen. Die US 4,528,235 beschreibt HDPE- oder PA-Filme, die mit plättchenförmigen Partikeln gefüllt sind. In der WO 97/27244 ist ein Polyimid-Pulver mit fein dispergierten Smectit-Bestandteilen offenbart.

Plättchenförmige mineralische Füllstoffe, darunter Schichtsilikate, werden bei Polymeren und Polymerbeschichtungen seit langem zur Verbesserung der Sperreigenschaften gegenüber Gasen und Dämpfen eingesetzt (siehe z.B. WO 98/24839). Die verbesserte Sperr-Wirkung beruht hierbei auf einer Verlängerung der Permeationswege durch die für Gas und Dampf undurchlässigen Füllstoffe. Die Füllstoffe werden dabei in der Regel delaminiert, um sie fein verteilt in eine Matrix einbringen zu können. Dies kann beispielsweise mit Hilfe der Techniken erfolgen, wie sie in den Druckschriften WO 93/04118, US 5,578,672, US 5,514,734, US 5,747,560 und WO 89/00545 beschrieben sind. Es ist dabei Stand der Technik, durch vorherige Modifizierung eine Anpassung der hydrophilen und daher intrinsisch nicht mit Polymeren mischbaren Schichtsilikate an die hydrophobere Polymermatrix zu erzielen.

Eine Sperrwirkung solcher Füllstoffe ist auch in der WO 00/44825 beschrieben, und zwar unter anderem im Zusammenhang mit Polysiloxan- bzw. Silicon-Elastomeren und -Duromeren.

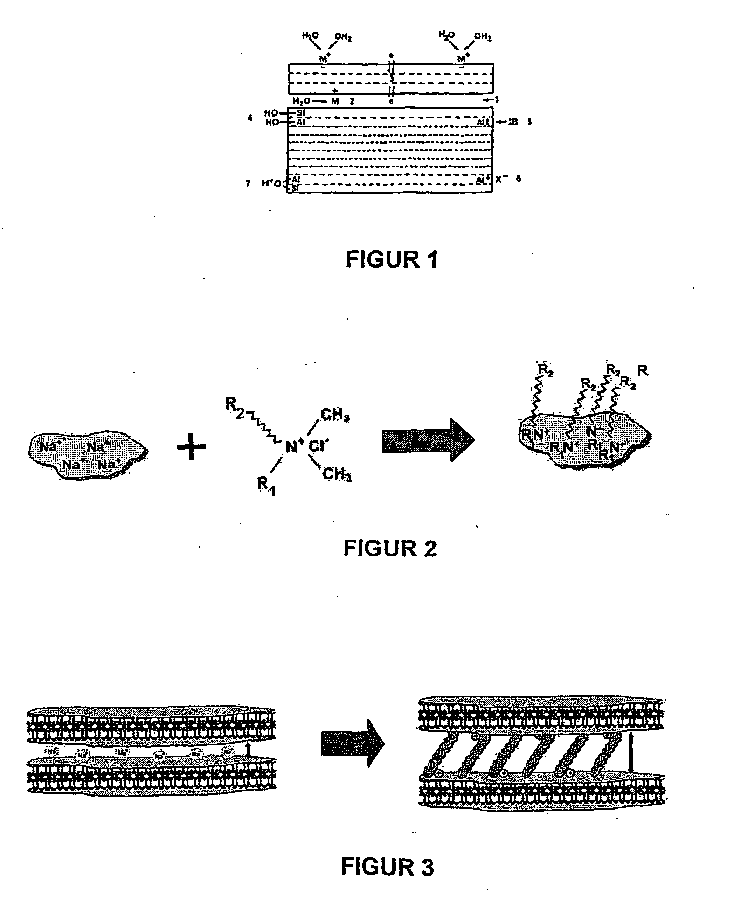

**Figur 1** zeigt schematisch die reaktiven Zentren von Schichtsilikaten, worin mit 1 Schichtzwischenräume zum Intercalieren bezeichnet werden und 2 austauschbare Kationen in den Zwischenschichten und auf den äußeren Oberflächen anzeigt. Mit 3 sind Metallionen unterschiedlicher Valenz bezeichnet und mit 4 Al-OH und Si-OH-Gruppen an den Kanten. Die Bezugsziffer 5 steht für Lewis-saure Zentren, 6 für Zentren mit austauschbaren Anionen und 7 für verbrückte Hydroxylgruppen.

Es gibt eine Reihe von Techniken, mit denen die erwähnte Modifizierung bewirkt werden kann. Eine dieser Techniken arbeitet mit der sogenannten "Pfropfreaktion", siehe "Tonminerale und Tone", K. Jasmund; G. Lagaly, Steinkopff-Verlag, Darmstadt, 1993. Hierbei erzielt man eine kovalente Anbindung des Modifizierungsreagens' an die Schichtsilikate durch die Reaktion der Hydroxylfunktionen des Schichtsilikates z.B. mit Silanen oder Isocyanaten. Da Schichtsilikate an den Basisflächen chemisch aber nahezu inert sind, erfolgt die "Pfropfreaktion" nur an den Kanten der Schichtsilikate. Tragen die angehefteten Moleküle weitere funktionelle Gruppen, kann durch diese eine kovalente Anbindungen an eine Polymermatrix erzielt werden.

Ein technisch sehr wichtiges Verfahren zur Modifizierung von plättchenförmigen mineralischen Füllstoffen ist die sogenannte "Onium"-Methode, bei der quarternäre Ammoniumionen (aber auch z.B. Phosphonium-, Sulfoniumionen oder andere Kationen) mit unterschiedlichen organischen Substituenten gegen Kationen in den Zwischenschichten und an den Basisflächen der Schichtsilikate ausgetauscht werden. Die lonenbindung der angehefteten kationischen Verbindungen ist so fest, daß ein Ablösen der organischen Kationen in den meisten Fällen nicht zu erwarten ist. Dieses Verfahren ist für Schichtsilikate sehr geeignet.

**Figur 2** zeigt schematisch die Hydrophobierung von Ton mit einer kationischen Organoverbindung. R₁ soll dabei einen funktionellen oder nicht funktionellen Rest darstellen. Auch R₂ ist ein organischer Rest mit oder ohne funktionelle Gruppen, der aber zusätzlich den Schichtabstand zwischen den anorganischen Schichten aufweiten kann.

Unter "anionischen" Tonen versteht man mit dem oben als "Onium"-Methode beschriebenen Verfahren modifizierte Schichtsilikate und verwandte, plättchenförmige Füllstoffe. Dabei trägt das Modifizierungsreagens neben der kationischen "Onium"-Funktionalität eine weitere, negativ geladene Gruppe, z.B. Sulfonsäure (siehe z.B. WO 99/35186). Diese zusätzliche Funktionalität bewirkt eine verbesserte Delamination der modifizierten Schichtsilikate aufgrund elektrostatischer Abstoßung der einzelnen modifizierten Schichten.

Die Modifizierung nach der "Onium"-Methode bewirkt zum einen eine Hydrophobierung der Basisflächen (siehe Figur 2), zum anderen wird eine Aufweitung der Schichten erzielt, die ein Eindringen von Polymermolekülen in die Zwischenschichten erleichtert und schließlich eine Delamination des Schichtsilikates in der Polymermatrix ermöglicht. Dieser Vorgang ist in **Figur 3** zu sehen, die die Aufweitung der Schichtabstände von Na-Montmorillonit nach Modifizierung mit einer kationischen Organo-Verbindung zeigt (der Schichtabstand dₛ im Na-Montmorillonit kann dabei von 1,03 nm auf 1,20-1,80 nm vergrößert werden). Dies sorgt für eine optimale Verteilung der einzelnen Schichtlamellen im Polymer. Durch die Wahl weiterer geeigneter funktioneller Gruppen kann dabei auch eine Wechselwirkung mit Polymeren bzw. sogar eine kovalente Anbindung erzielt werden.

Nachstehend sind Veröffentlichungen genannt, die sich mit dem Einbau von modifizierten Schichtsilikaten in Kunststoffe befassen: Aus quellbaren Smectiten hergestellte Nanokomposite, die sich für eine Reihe von Matrices eignen, sind in der WO 99/07790 beschrieben. Eine hydrophile Gruppe wird mit dem Ton verknüpft, eine reaktive Gruppe mit der Polymermatrix. Die EP 747322 A1 beschreibt die Verwendung von Ammonium-Derivaten zum Quellen von Schichtsilikaten. Hochmolekulare Polymere dringen in den gequollenen Ton ein und werden über OH-Gruppen ebenfalls an die Schichtsilikate gebunden. Gemäß der WO 99/35185 wird ein Nanocomposit durch Modifizierung von Tonen mit ω-Aminosäure und anschließende Umsetzung mit Caprolactam erzeugt. Die WO 99/35186 beschreibt einen "anionischen" Ton, der durch ammoniumfunktionelle Verbindungen mit zusätzlicher anionischer Gruppe modifiziert wird.

Übliche Kaschierkleber sind bekannt. Allerdings besitzen diese keine besondere Barrierefunktion: Sollen Hochbarriereverbünde erzeugt werden, so wird die Barriere üblicherweise mit Hilfe von anderen Schichten aufgebaut.

**Aufgabe** der vorliegenden Erfindung ist es, eine Kaschierkleber-Zusammensetzung auf Basis eines anorganisch-organischen Hybridpolymeren wie in der Einleitung definiert mit verbesserter Barrierewirkung gegenüber Gasen und Dämpfen bereitzustellen. Weiterhin umfaßt die Aufgabe die Bereitstellung eines Verfahrens zum Verkleben von Verbundmaterialien mit einer solchen Kaschierklebermasse sowie mit dieser Masse hergestellter Verbundmaterialien.

Diese Aufgabe wird durch die Bereitstellung einer Kaschierklebemasse gelöst, die erhältlich ist aus oder unter Verwendung von:
A) mindestens einem Silan der Formeln (I), (II) oder (III)

   XₐR_{b}SiR¹ _{4-a-b} (I)

   [P]⁺ [XₐR_{b}SiR² _{4-a-b}]⁻ (II)

   [XₐR_{b}SiR³ _{4-a-b}]⁺ [Q]⁻ (III)

   worin
   X eine hydrolysierbare Gruppe ist,
   R ggf. substituiertes Alkyl, Alkenyl, Aryl, Alkylaryl oder Arylalkyl ist,
   R¹ ein organischer Rest ist, der über Kohlenstoff an das Silicium gebunden ist und eine Gruppe trägt, die organische Polymerisationsreaktionen eingehen kann,
   R² ein organischer Rest ist, der eine negative Ladung trägt,
   R³ ein organischer Rest ist, der eine positive Ladung trägt
   [P]⁺ ein anorganisches oder organisches Kation ist,
   [Q]⁻ ein anorganisches oder organisches Anion ist,
   a eine ganze Zahl von 1 bis 3 ist,
   b eine ganze Zahl von 0 bis 2 ist, und
   mindestens im Falle der Formeln (II) und (III) a+b 3 bedeutet,
   durch zumindest teilweise Hydrolyse und Kondensation der an dem/den Silan(en) vorhandenen anorganisch reaktiven Gruppen
   **dadurch gekennzeichnet, daß** die Masse
(B) mindestens einen mineralischen, plättchenförmigen, modifizierten Füllstoff aufweist, der definiert ist wie in Anspruch 1 angegeben und der in die Kaschierklebemasse entweder anorganisch einkondensierbar und/oder organisch einpolymerisierbar und/oder durch lonenbindung einbindbar ist, oder der in die Kaschierklebemasse entweder anorganisch einkondensiert und/oder organisch einpolymerisiert und/oder durch lonenbindung eingebunden ist.

Außerdem stellt die Erfindung ein Verfahren zum Herstellen einer solchen Kaschiermasse, sowie ein mit Hilfe dieser Kaschiermasse kaschiertes Verbundmaterial bereit.

Erfindungsgemäß konnte festgestellt werden, daß an sich bekannte Beschichtungsmaterialien auf Basis anorganisch-organischer Hybridpolymere auch als Kaschierklebemassen mit besonders guten Barriereeigenschaften verwendbar sind, wenn in das - an sich bekannte - anorganisch-organische Polymernetzwerk die wie angegeben modifizierten Füllstoffe kovalent oder auch ionisch eingebunden sind. Gut geeignet als derart modifizierte Füllstoffe sind Schichtsilikate, z.B. Hectorite, Montmorillonite oder Vermiculite, da diese sich nach der Modifizierung homogen in das anorganisch-organische Netzwerk einbauen lassen. Durch die Kristallinität der Schichtsilikate und den kovalenten Einbau in die anorganisch-organischen PolymerMatrices wird die Durchlässigkeit von Gasen und Dämpfen durch die Masse stark behindert, so daß sie als Barrierefüllstoffe anzusehen sind.

Die Modifikation und der Einbau der Füllstoffe kann auf unterschiedliche Weise erfolgen:

In einer ersten Ausgestaltung der Erfindung wird die Modifizierung mit Reagentien vorgenommen, die Funktionalitäten zu einer kovalenten Anbindung über anorganische Kondensationsreaktionen an die umgebende Matrix zur Verfügung stellen können, z.B. mit Alkoxysilylfunktionalitäten. Wird die Onium-Methode angewendet, können hierfür beispielsweise ammonium-funktionelle Alkoxysilane eingesetzt werden, beispielsweise Di-, Tri- oder Tetraalkylammonium-silylalkyl-halogenide mit Alkoxysilangruppen.

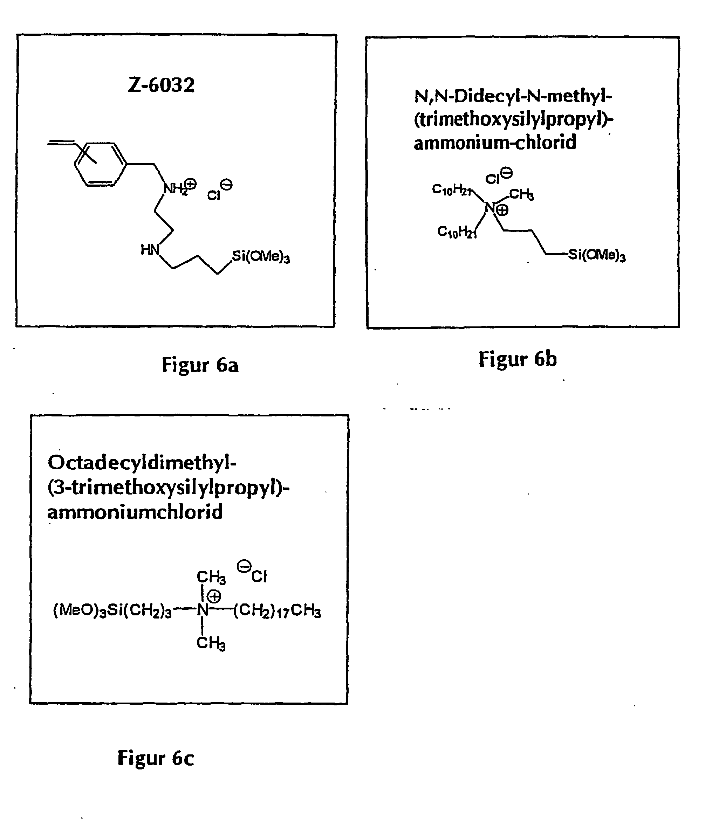

In einer zweiten Ausgestaltung kann in besonders bevorzugter Weise eine Gruppe der "Onium"-Verbindung zusätzlich eine organisch polymerisierbare Gruppe enthalten, z.B. kann ein Ammoniumion eine (Meth-)Acrylat-, oder Vinylgruppe enthalten. Ein Beispiel für ein ammonium-funktionelles Alkoxysilan mit organisch polymerisierbarer Gruppe ist die Verbindung "Z6032", deren Strukturformel in Figur 6a angegeben ist.

Als eine dritte Alternative kann die Modifizierung auch über Reagentien erfolgen, die über keine Silylreste verfügen. So können, z.B. nach der "Onium"-Methode, hierfür rein organische Verbindungen eingesetzt werden, die über organisch polymerisierbare Gruppen verfügen. Beispiele hierfür sind Ester der Methacrylsäure mit Trimethyl-2-hydroxyethyl-ammoniumchlorid (käuflich als Pleximon 730, UV-härtbar) oder N,N-N-Trimethyl-N-(10-undecenyl)-ammoniumbromid oder die entsprechende GlycidylVerbindung.

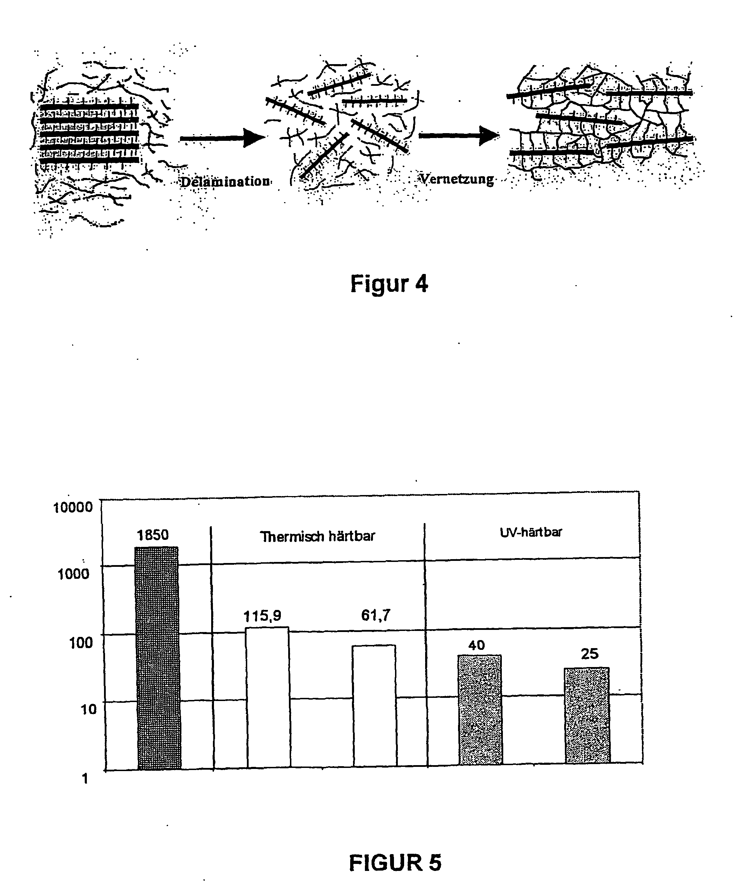

Mit den drei vorgenannten Ausgestaltungen lassen sich Füllstoffe erhalten, die entweder anorganisch (über Kondensationsreaktion) und/oder organisch (über organische Polymerisationsreaktionen) kovalent in das Netzwerk des Kaschierklebers eingebunden werden. **Figur 4** zeigt schematisch die Delamination und Vernetzung eines derartigen Barrierefüllstoffs in das Matrixmaterial durch kovalente Einbindung.

Darüberhinaus können die modifizierten Füllstoffe, insbesondere Schichtsilikate, als vierte Möglichkeit in einer weiteren Ausgestaltung zusätzlich mit ungeladenen Alkoxysilanen umgesetzt werden. Vor allem dann, wenn das modifizierende Agens selbst keine organisch vernetzbaren Gruppen trägt, können auf diese Weise anschließend weitere organofunktionelle Gruppen (wie z.B. Epoxide, Acrylate etc.) durch Kondensationsreaktionen an die genannten Modifizierungsreagentien angeknüpft werden. Dadurch wird ein weiterer Zugang zu modifizierten Füllstoffen, insbesondere Schichtsilikaten mit organofunktionellen Gruppen ermöglicht, die im Zuge des Sol-Gel-Prozesses ausschließlich oder zusätzlich kovalent an das organische Netzwerk der Matrix angebunden werden können.

Alternativ ist es fünftens auch möglich, die modifizierten Füllstoffe über lonenbindungen in die anorganisch-organische Polymermatrix einzuarbeiten, und zwar dann, wenn die Polymermatrix geladene Ausgangsmaterialien, z.B. geladene Silane wie Ammoniumsilane, enthält. Die Füllstoffe werden zu diesem Zweck z.B. mit zwitterionischen Substanzen wie Aminosäuren oder Aminosulfonsäuren umgesetzt, wobei es hierbei aus sterischen Gründen bevorzugt ist, längerkettige ω-Aminosäuren wie z.B. 12-Aminolaurylsäure oder p-substituierte Aromaten wie Sulfanilsäure zu verwenden. Der Füllstoff erhält auf diese Weise überschüssige Ladungen (hier z.B. negative Ladungen durch die Carboxylatgruppen), die mit den Ammoniumgruppen der Polymermatrix in ionische Wechselwirkung treten. Dieses Prinzip ist auch mit umgekehrten Ladungsverhältnissen möglich, z.B. bei Einsatz einer Polymermatrix, die anionisch geladene Silane enthält wie silansubstituiertes EDTA (z.B. N-(Trialkoxysilylpropyl)ethylendiamin-triessigsäure-trinatriumsalz.

In einer sechsten Ausgestaltung der Erfindung können die Füllstoffe mit silanfreien organischen Ammoniumverbindungen umgesetzt werden, z.B. mit einem längerkettigen primären Ammoniumsalz wie Octadecyl-ammoniumchlorid. Werden solche Füllstoffe in Polymermatrices mit gleichsinnig geladenen Silanen eingearbeitet, werden die Silane über eine lonenaustauschreaktion an die funktionellen Gruppen der Füllstoffe gebunden. Mit diesem Verfahren ist es möglich, lagerstabile Schichtsilikate zu erzeugen, die mit wenig oder nicht reaktiven Ammoniumverbindungen modifiziert sind. Beim Einbringen in die Polymermatrix verdrängen die Ammonium-Funktionalitäten, die in der Matrix enthalten sind, die zur Modifizierung verwendeten Ammonium-Reagenzien, d.h., es wird ein lonenaustausch durchgeführt.

Die Menge an modifiziertem Schichtsilikat kann in geeigneter Weise gewählt werden. Günstig sind etwa 0,25-15 Gew.-%, bezogen auf das Gesamtgewicht der Kaschierklebemasse ohne evtl. vorhandene Lösungsmittel. Bevorzugt sind häufig 0,5-5 Gew.-%.

Die Beschichtungsmasse wird hergestellt, indem die Ausgangsverbindungen, also Silane und ggf. weitere hydrolysierbare Metallverbindungen, ggf. in Gegenwart weiterer Zusätze, der sogenannten Sol-Gel-Bildung unterworfen, also mit Hilfe von Wasser oder einem anderen hydrolysierenden Agens und ggf. Katalysator in an sich bekannter Weise zumindest teilweise hydrolysiert und anorganisch kondensiert werden. Der Barrierefüllstoff kann dem Reaktionsgemisch bereits zuvor oder während dieser Umsetzung zugegeben werden; er kann aber auch erst nach abgeschlossener (Teil-)Hydrolyse und (-)Kondensation in das entstandene Sol eingearbeitet werden.

Als Zusätze eignen sich z.B. Silane der Formel (VI),

Si(OR)₄ (VI)

worin R die in Anspruch 1 für Formeln (I) bis (III) genannte Bedeutung besitzt und vorzugsweise Methyl oder Ethyl, ganz besonders bevorzugt Ethyl ist, oder Metallverbindungen der Formel (IV)

M(OR)ₙ, (IV)

worin M ein Alkoxiverbindungen bildendes Hauptgruppen- oder Übergangsmetall ist und vorzugsweise ausgewählt ist unter Ge, Sn, Pb, Ti und Zr, wobei n 4 bedeutet, oder vorzugsweise ausgewählt ist unter B und Al, wobei n 3 bedeutet, und
R die gleiche Bedeutung wie in den Formeln (I) bis (III) des Anspruchs 1 hat, oder Komplex-Derivate von Metallverbindungen der Formel (IV), wobei ein Teil oder alle Gruppen OR ersetzt sind durch einen oder mehrere Liganden L, die stärker an das Metall M gebunden werden als die Gruppe (OR). Solche Komplex-Derivate können z.B.

Verbindungen mit der Formel (V)

(RO)ₘMLₙ, (V)

sein, worin M gleich Ti, Zr oder Al ist, R C₁-C₆-Alkyl ist,
L ausgewählt ist unter 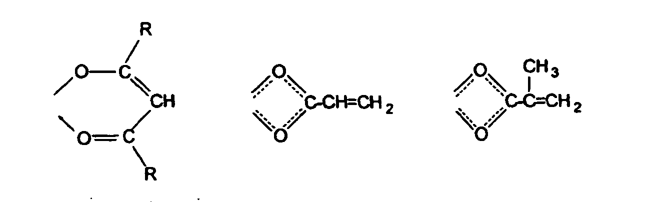 wobei R wie in Formel (I) definiert ist,
m eine ganze Zahl von 1 bis 3 ist und
n eine ganze Zahl von 1 bis 3 ist.

In einer bevorzugten Ausgestaltung ist die erfindungsgemäße Kaschierklebemasse frei oder im wesentlichen frei von niedrigsiedendem Lösemittel, besitzt aber trotzdem die erforderliche Stabilität und Viskosität bzw. ausreichende Verklebungseigenschaften. Zum Zeitpunkt der Zusammenführung der zwei zu verklebenden Folien sollte die Klebemasse nämlich einerseits ausreichend klebrig sein, sollte aber andererseits in einer Vielzahl von Fällen möglichst wenig Lösemittel enthalten, da dieses nach dem Kaschieren der Folien im wesentlichen im Folienverbund verbleiben könnte, z.B. wenn kein zusätzlicher Trocknungsschritt nach Aufbringen der Kaschierklebemasse auf die zu verklebenden Substrate und vor dem Verkleben vorgenommen werden soll. Die Anwesenheit von Lösemittel im Folienlaminat ist von Nachteil, da es aus dem Kaschierkleber migrieren und zur Enthaftung führen kann, was die Verbundhaftungseigenschaften negativ beeinflußt. In speziellen Fällen können Lösemittel außerdem eine Gefahr für das Packgut darstellen, beispielsweise, wenn die kaschierten Folien im Lebensmittelbereich eingesetzt werden sollen. Und schließlich kann der Restlösemittelgehalt im Folienverbund hinderlich für eine möglichst quantitative Vernetzung der organischen Komponenten der Kaschierklebemasse sein; dies wirkt sich wiederum verschlechternd auf die Barrierewerte aus.

Für diese Ausgestaltung der Erfindung werden die Ausgangsbestandteile für die Kaschiermassen vor oder nach Zugabe der modifizierten Barrierefüllstoffe wie oben beschrieben hydrolysiert und kondensiert, worauf das niedersiedende Lösemittel, das im Zuge der Sol-Gel-Bildung zugegeben worden war und/oder anfiel, ganz oder zumindest zu einem wesentliche Anteil entfernt wird. Dies kann beispielsweise durch Abdestillation von Lösemittel in Form eines Azeotrops erfolgen.

Um die jeweils erforderliche Kaschierkleberviskosität bzw. ausreichende Verklebungseigenschaften einzustellen und um die Systeme stabil zu halten, können ggf. sogenannte Reaktivlösemittel zugegeben werden, d.h. Substanzen, die einerseits die Viskosität und/oder Stabilität des Sols bzw. Gels beeinflussen, andererseits selbst in den Verbund der Kaschierklebemasse eingebunden werden können. In den bevorzugten Fällen, in denen die Kaschierklebemasse nach dem Kaschieren durch organische Vernetzung (z.B. thermisch oder photochemisch) ausgehärtet wird, sind hierfür insbesondere flüssige, nieder- bis hochviskose organische Monomere oder Oligopolymere mit organisch polymerisierbaren Gruppen geeignet, z.B. Epoxide, Polyepoxide, Acrylate, Mehrfachacrylate oder Methacrylate.

Alternativ oder zusätzlich zur Zugabe von Reaktivlösemittel kann die erforderliche Stabilität, Viskosität oder Klebrigkeit durch das Vorhandensein oder die nachträgliche Zugabe von flüssigen, nieder- bis hochviskosen Silanen bewirkt werden, die organisch polymerisierbare Gruppen wie Acrylate oder Methacrylate oder Polyepoxide aufweisen. Diese Silane können als Monomere, ggf. aber auch als Vorpolymere, z.B. mit niedrigem Polymerisationsgrad, zugesetzt werden.

Der Zusatz von Reaktivlösemittel und/oder von organisch polymerisierbaren Silanen hat den Vorteil, daß die Klebrigkeit/Viskosität der Kaschierklebemasse bzw. ihre Stabilität mit Hilfe von Komponenten bewirkt wird, die durch Vernetzung selbst Bestandteil des Polymeren werden und daher zu einem späteren Zeitpunkt, z.B. bei einer möglicherweise zu erfolgenden Nachbehandlung der kaschierten Folien durch Erwärmen zum Zwecke einer organischen Vernetzung, oder über die Lebensdauer der kaschierten Folie hinweg nicht migrieren können. Denn bei der organischen Vernetzung werden keine weiteren Lösemittel mehr gebildet. Außerdem kann durch die zusätzliche Bereitstellung von organisch polymerisierenden Gruppen ein höherer Vernetzungsgrad und damit eine verbesserte Festigkeit erzielt werden.

Es ist empfehlenswert, daß in der erfindungsgemäßen Kaschierklebemasse zum Zeitpunkt des Kaschierprozesses selbst die anorganische Vernetzung der vorhandenen Komponenten weitgehend abgeschlossen ist bzw. nur noch sehr wenig oder gar keine vernetzbaren Silanolgruppen mehr vorliegen. Dies gilt vor allem für solche Kaschierklebemassen, die nach dem Kaschieren der Folien oder dgl. organisch vernetzt werden sollen, und ganz besonders dann, wenn diese Vernetzung thermisch erfolgen soll. Denn bei unvollständiger anorganischer Reaktion setzt sich der Ablauf des Sol-Gel-Prozesses (der organische Hydrolyse-*N*ernetzungsprozeß) während der thermischen Behandlung im Trockenkanal fort, und reaktionsbedingt werden weiterer Alkohol bzw. weiteres Wasser gebildet, was zu den oben beschriebenen Nachteilen führt. Ggf. kann eine anorganische Nachvernetzung allerdings auch noch nach dem Aufbringen der Kaschiermasse erfolgen; wesentlich ist aber, daß die Bedingungen dann so gewählt sind, daß zum Zeitpunkt der Verklebung Kondensationsreaktionen nicht mehr in einem solchen Umfang stattfinden, daß eine störende Menge an Lösungsmittel (je nach hydrolysierbaren Gruppen z.B. Wasser, Säure, Alkohol) freigesetzt wird. Gut geeignet als Bestandteile der Ausgangsmaterialien für Kaschierklebemassen, deren anorganische Vernetzung vor dem Kaschierprozeß weitgehend abgeschlossen werden kann, sind Silane mit wenigen Alkoxygruppen wie Dialkoxysilane oder Monoalkoxysilane, oder vorvernetzte Tetramethoxy- oder Tetraethoxysilan-Einheiten, wobei ein Teil dieser Silane mindestens eine organisch vernetzbare Gruppe tragen kann. Zur Sol-Gel-Bildung, also der anorganischen Polymerisation über Hydrolyse- und Kondensationsreaktionen, können diesen ggf. die üblichen Hydrolyse- bzw. Kondensationskatalysatoren zugegeben werden. Anschließend kann der oben beschriebene Lösemittelaustausch (Wasser/Alkohol gegen Reaktivlösemittel) erfolgen. Die Barrierefüllstoffe werden vorzugsweise nach vollständiger oder teilweiser Kondensation der anorganischen Komponenten zugesetzt; in geeigneten Fällen kann von dieser Abfolge jedoch auch abgewichen werden. Die Füllstoffe werden in diesen Ausgestaltungen der Erfindung vorzugsweise kovalent in die hybride Matrix eingebunden und dann entweder über anorganische Gruppen und/oder über organische Reste vernetzt, wobei letzteres zusammen mit der Vernetzung der übrigen organischen Komponenten erfolgt, also in der Regel erst nach dem Auftragen der Kaschierklebemasse und Kaschieren der Folien. Die anorganische Vorvernetzung führt im allgemeinen nicht zu einer Verkürzung der Topfzeit bzw. Erhöhung der Viskosität.

Nach dem Aufbringen der Kaschierklebemassen und vor dem Laminieren kann möglicherweise noch vorhandenes Lösemittel entfernt werden, beispielsweise durch Erwärmen.

Eine organische, thermisch oder photochemisch induzierte Vernetzung kann bei Vorhandensein entsprechender organischer Gruppen in der Kaschierklebemasse nach deren Aufbringen auf die zu verklebenden Substratoberflächen erfolgen, wobei thermische Vernetzungen unabhängig von der Ausgestaltung des Substrats und photochemische Vernetzungen z.B. dann möglich sind, wenn mindestens eine der zu kaschierenden Folien für die Wellenlänge des die Reaktion bewirkenden Lichts (z.B. UV) durchlässig ist. Bei der Vernetzung wird ein die Kaschiermasse verfestigendes organisches Netzwerk aufgebaut, ohne daß Lösemittel in erwähnenswertem Umfang entsteht. Die Kaschierklebemasse kann ggf. geeignete, im Stand der Technik bekannte Katalysatoren für die Vernetzungsreaktion aufweisen.

In einer besonderen Ausgestaltung der Erfindung werden als Komponenten der Kaschierklebemasse Mehrfachsilane mit mindestens zwei organisch polymerisierbaren Gruppen eingesetzt, die in Abwesenheit von Alkohol oder Wasser und vorzugsweise weitgehend von sonstigem Lösungsmittel mit modifiziertem Barrierefüllstoff versetzt werden, der mit den organisch polymerisierbaren Gruppen der Silane copolymerisieren kann. Beispielsweise können hierfür Mehrfach(meth)acrylatsilane zusammen mit (meth)acrylatmodifiziertem Füllstoff eingesetzt werden. Um solchen Massen eine geeignete Viskosität für das Kaschieren zu verleihen, können sie ggf. erwärmt werden. Die organische Vernetzung nach dem Kaschieren erfolgt wie oben beschrieben.

### Ausführungsbeispiele:

### Beispiel 1

Synthese von mit den erfindungsgemäßen Matrices kompatiblen Schichtsilikaten: 100 ml einer wäßrigen Dispersion von 0.8 g aufgereinigtem Na-Montmorillonit (SWy-2, Source Clay Repository, IEC = 76,4 MEQ) wurden mit a) 0,99 g (1,53 mmol) Z-6032, 42% in Methanol (Hersteller: Dow Corning, Formel siehe **Figur 6a**) verdünnt mit 20 ml Methanol oder b) mit 1,86 g (1,53 mmol) N,N-Didecyl-N-methyl-(trimethoxysilylpropyl)-ammonium-chlorid, 42% in Methanol (Hersteller: ABCR, Formel siehe **Figur 6b**) verdünnt mit 20 ml Methanol; oder (C) mit 1,27 g (1,53 mmol) Octadecyldimethyl-(3-trimethoxysilylpropyl)ammoniumchlorid, 60% in Methanol (Hersteller: ABCR, Formel siehe **Figur 6c**) verdünnt mit 20 ml Methanol, umgesetzt.

Hierdurch erfolgt eine organische Modifizierung des Schicht-silikats, das dabei mit Alkoxy-Funktionalitäten versehen wird, die eine kovalente anorganische Anbindung des modifizierten Schichtsilikats an die Lackmatrix im Sol-Gel-Prozeß ermöglichen. Im Fall von Modifizierungsreagenz gemäß Figur 6a erfolgt zusätzlich die Bereitstellung einer organischen Funktionalität, die neben der anorganischen Einbindung über die Alkoxysilyl-Funktion im Zuge einer photochemischen Aushärtung auch eine kovalente Anbindung in das organische Netzwerk erlaubt. Das hergestellte modifizierte Schichtsilikat wird abfiltriert. Der Filterkuchen wird mit 400 ml Wasser mit einer Temperatur von 40°C bis zur Salzfreiheit gewaschen (Überprüfung des Filtrats mit AgNO₃-Lösung). Im Folgenden wäscht man mit 40 ml Methanol nach und zieht den Filterkuchen im Wasserstrahlvakuum trocken. Der Filterkuchen wird anschließend gefriergetrocknet und kleingemörsert.

### Beispiel 2

### Vorschrift für eine Synthese thermisch härtbarer Kaschierklebemassen

0 - 45 Molprozente TMOS, 30 - 50 Molprozente GLYMO werden zusammen mit 5-20 Molprozenten Aluminium-sec-butylat und /oder 5-20 Zirkon-n-propylat, komplexiert mit jeweils 0.5 - 1.5 Equivalenten Triethanolamin oder Acetessigsäureethylester zusammengewogen und mit Wasser unter Säure- oder Basenkatalyse hydrolysiert. Nach Ablauf der Hydrolysereaktion wird in mehreren Schritten vorhandenes Lösungsmittel (Alkohole und Wasser) entfernt. Zum Erhalt der Verarbeitbarkeit werden je nach Anforderung zwischen 0 und 50 Gew.-% eines thermisch einvernetzbaren Reaktivlösungsmittels (z.B. ein Polyepoxid) oder eines mono- oder dialkoxyfunktionellen Silans zugegeben. Zu dieser Formulierung werden im folgenden 0,25 - 10 Gew. % modifizierter Barrierefüllstoff zugegeben. Die Dispergierung erfolgt mit Ultraschall.

### Beispiel 3

### Vorschrift für eine Synthese lichtinduziert härtbarer Kaschierklebemassen

40 - 70 Molprozente eines UV-vernetzbaren Silans, z.B. Z-6032 (Hersteller: DOW Corning), 20-40 Molprozente TMOS und 0 - 40 Molprozente eines Metallalkoholates, z.B. Aluminium-sec-butylat, wahlweise vorkomplexiert mit 0.5 - 1.5 Equivalenten Triethanolamin oder Acetessigsäureethylester, werden mit 0.5 - 1.2 Equivalenten Wasser unter Säure- oder Basenkatalyse hydrolysiert. Nach Ablauf der Hydrolyse-Reaktion entfernt man in mehreren Schritten vorhandenes Lösungsmittel. Zum Erhalt der Verarbeitbarkeit werden je nach Anforderung zwischen 0 bis 50 Gew.-% eines mittels UV-einvernetzbaren Reaktivlösungsmittels (z.B. eines Mono- oder Mehrfachacrylats) oder eines mono- oder dialkoxyfunktionellen, mittels UV-Licht einvernetzbaren Silans zugegeben.
Zum so gebildeten Lack werden im folgenden 0,25 - 10 Gew.-% eines modifizierten Barrierefüllstoffs zugegeben. Die Dispergierung erfolgt mit Ultraschall. Vor der Aushärtung setzt man einen UV-Starter zu.

### Beispiel 4

### Ausführungsbeispiel zur Vorschrift des Beispiels 2

4,07 g (26,7 mmol; 35 Mol.%) TMOS,
8,13 g (34,4 mmol; 45 Mol.%) GLYMO
werden mit einem Vorkomplexat von
1,88 g (7,6 mmol; 10 Mol %) Aluminium-sec-butylat,
3,43 g (7,6 mmol; 10 Mol.%) Zirkon-n-propylat (72,9 %) und
2,85 g (19,1 mmol; 1.25 Equivalenten) Triethanolamin zusammengewogen.

Die Hydrolyse erfolgt schrittweise mit insgesamt 9,64 g (534,8 mmol) 0,1 n HCI.
Nach Ablauf der Hydrolysereaktion wird in mehreren Schritten vorhandenes Lösungsmittel (Alkohole und Wasser) entfernt, bis ein Feststoffgehalt von 60 % erreicht ist. Sodann setzt man der Masse 4,08 g (20 mmol) Glycerindiglycidylether zu.
Zur Lack-Formulierung werden im folgenden 0,25 Gew.-% nach Beispiel 1(c) modifiziertes Schichtsilikat zugegeben. Die Dispergierung erfolgt mit Ultraschall.

Die Sauerstoffsperreigenschaften (nach DIN 53380 Teil 3, 23°C, 0% RF) einer mit dieser Kaschierklebemasse beschichteten Polypropylen-Folie (50µm), (als Topcoat) sind in **Figur 5** dargestellt. Die Einheit ist logarithmisch in cm³/m³ d bar angegeben. Der Verbesserungsfaktor der Sperreigenschaften betrug 47%.

### Beispiel 5

### Ausführungsbeispiel zur Vorschrift des Beispiels 3

6,19 g (7,7 mmol; 50 Mol.%) Z-6032 (Hersteller: DOW Corning) und 1,17 g (7,7 mmol; 50 Mol.%) TMOS werden vollstöchiometrisch mit 0,1 n HCI hydrolysiert. Nach Ablauf der Hydrolyse-Reaktion entfernt man in mehreren Schritten vorhandenes Lösungsmittel (Alkohol, Wasser). Sodann setzt man der Masse 4,56 g (20 mmol) Glycerindimethacrylat zu.
Zum gebildeten Lack werden im folgenden 1,5 Gew.-% nach Beispiel 1(a) modifiziertes Schichtsilikat zugegeben. Die Dispergierung erfolgt mit Ultraschall. Vor der Aushärtung setzt man 1 Gew. % eines UV-Starters (z.B. Irgacure 184) zu.
Die Sauerstoffsperreigenschaften (nach DIN 53380 Teil 3, 23°C, 0% RF) einer mit dieser Kaschierklebemasse beschichteten Polypropylen-Folie (50µm), (als Topcoat) sind in **Figur 5** dargestellt. Die Einheit ist logarithmisch in cm³/m³ d bar angegeben. Der Verbesserungsfaktor der Sperreigenschaften betrug 37 %.

Der in der **Figur 5** links gezeigte Balken zeigt die Sperrschichteigenschaft einer unbeschichteten, 50 um dicken Polypropylenfolie für Sauerstoff als Blindwert. Im danebenliegenden Feld "thermisch härtbar" ist die Sauerstoffsperreigenschaft von Kaschierklebemassen des Beispiels 4 auf dieser Folie gezeigt, und zwar links ohne das wie dort beschrieben eingearbeitete Schichtsilikat, rechts mit Schichtsilikat in der dort angegebenen Menge. Das rechte Feld "UV-härtbar" zeigt diese Eigenschaft von Kaschierklebemassen des Beispiels 5 auf derselben Folie, und zwar wiederum links ohne Schichtsilikat, rechts mit Schichtsilikat in der angegebenen Menge.

## Patentansprüche

1. Kaschierklebemasse, erhältlich aus oder unter Verwendung von:
A) mindestens einem Silan der Formeln (I), (II) oder (III)
XₐR_{b}SiR¹ _{4-a-b} (I)
[P]⁺ [XₐR_{b}SiR² _{4-a-b}]⁻ (II)
[XₐR_{b}SiR³ _{4-a-b}]⁺ [Q]⁻ (III)
worin
X eine hydrolysierbare Gruppe ist,
R ggf. substituiertes Alkyl, Alkenyl, Aryl, Alkylaryl oder Arylalkyl ist,
R¹ ein organischer Rest ist, der über Kohlenstoff an das Silicium gebunden ist und eine Gruppe trägt, die organische Polymerisationsreaktionen eingehen kann,
R² ein organischer Rest ist, der eine negative Ladung trägt,
R³ ein organischer Rest ist, der eine positive Ladung trägt,
[P]⁺ ein anorganisches oder organisches Kation ist,
[Q]⁻ ein anorganisches oder organisches Anion ist,
a eine ganze Zahl von 1 bis 3 ist und,
b eine ganze Zahl von 0 bis 2 ist,
mindestens im Falle der Formeln (II) und (III) a+b 3 bedeutet,
durch zumindest teilweise Hydrolyse und Kondensation der an dem/den Silan(en) vorhandenen anorganisch reaktiven Gruppen
**dadurch gekennzeichnet, daß** die Masse B) mindestens einen mineralischen, plättchenförmigen, modifizierten Füllstoff aufweist, der ausgewählt ist unter solchen Füllstoffen, die mit den folgenden Reagentien modifiziert sind:
(a) Reagentien, die Funktionalitäten zu einer kovalenten Anbindung an das Kondensat gemäß (A) über anorganische Kondensationsreaktionen zur Verfügung stellen können,
(b) Reagentien, die organisch polymerisierbare Gruppen für eine organische Polymerisationsreaktion mit dem Kondensat gemäß (A) zur Verfügung stellen können,
(c) Reagentien, die sowohl Funktionalitäten zu einer kovalenten Anbindung an das Kondensat gemäß (A) über anorganische Kondensationsreaktionen als auch organisch polymerisierbare Gruppen für eine organische Polymerisationsreaktion mit diesem Kondensat zur Verfügung stellen können,
(d) Reagentien gemäß (a), (b) oder (c) und zusätzlich ungeladenen Alkoxysilanen,
(e) zwitterionischen Reagentien, die dem Füllstoff Ladungen verleihen, die mit gegengeladenen Gruppen des Kondensats gemäß (A) in ionische Wechselwirkung treten können, wenn dieses unter Einsatz mindestens eines Silans der Formel (II) oder (III) erhalten wurde,
(f) organischen, silanfreien Ammoniumverbindungen, deren Ammoniumgruppen gegen gleichgeladene Kationen des Kondensats (A) ausgetauscht werden können, wenn dieses unter Einsatz mindestens eines Silans der Formel (II) erhalten wurde, (aus Anspruch 3) und
der in das Kondensat gemäß (A) entweder anorganisch einkondensierbar und/oder organisch einpolymerisierbar und/oder durch lonenbindung einbindbar ist, oder der in das Kondensat gemäß (A) entweder anorganisch einkondensiert und/oder organisch einpolymerisiert und/oder durch lonenbindung eingebunden ist.

2. Kaschierklebemasse nach Anspruch 1, **dadurch gekennzeichnet, daß** der mineralische, plättchenförmige, modifizierte Füllstoff ein modifiziertes Schichtsilikat ist.

3. Kaschierklebemasse nach Anspruch 1 oder 2, **dadurch gekennzeichnet, daß** der mineralische, plättchenförmige Füllstoff mit organisch modifizierten Silanen, organisch modifizierten Isocyanaten oder organischen Onium-Verbindungen, vorzugsweise Ammonium- oder Phosphoniumverbindungen, modifiziert ist, und daß der Füllstoff anorganisch in die Kaschierklebemasse einkondensierbar oder einkondensiert ist.

4. Kaschierklebemasse nach einem der voranstehenden Ansprüche, **dadurch gekennzeichnet, daß** der mineralische Füllstoff in einer Menge von 0,25-10 Gew.-%, vorzugsweise von 0,5-5 Gew.-%, bezogen auf das Gesamtgewicht der Zusammensetzung ohne Lösungsmittel, vorhanden ist.

5. Kaschierklebemasse nach einem der voranstehenden Ansprüche, worin die Indices der Silane der Formeln (I) bis (III) die folgende Bedeutung haben:
X ist Wasserstoff, Halogen, Hydroxy, eine ggf. substituierte Alkoxy-, Acyloxy-, Alkylcarbonyl- oder Alkoxycarbonylgruppe mit vorzugsweise 1-10 Kohlenstoffatomen in der Alkyl- oder Acylgruppe, NR⁴ mit R⁴ gleich Wasserstoff, ggf. substituiertes Alkyl mit vorzugsweise 1-10 Kohlenstoffatomen oder ggf. substituiertes Aryl,
R ist eine ggf. substituierte Alkyl-, Alkenyl-, Aryl-, Alkylaryl- oder Arylalkylgruppe mit 1 bis 10, vorzugsweise 1 bis 6 Alkylkohlenstoffen,
R¹ trägt mindestens eine Amino-, Epoxid-, Vinyl- oder (Meth-)Acrylatgruppe, die vorzugsweise über eine Gruppe mit einer Kettenlänge von mindestens 4 Atomen an Silicium gebunden ist,
R² ist ein carboxylatgruppenhaltiger organischer Rest,
R³ ist ein ammoniumgruppenhaltiger organischer Rest
[P]⁺ ist Ammonium oder ein Natrium- oder Kaliumion,
[Q]⁻ ist R⁵COO⁻ mit R⁵ gleich Niederalkyl, vorzugsweise Methyl oder C₂-C₄-Alkyl, oder ein Halogenanion, vorzugsweise Bromid oder Chlorid.

6. Kaschierklebemasse nach Anspruch 1 oder 2 unter Verwendung mindestens eines Silans der Formel (I) mit a+b gleich 3.

7. Kaschierklebemasse nach einem der voranstehenden Ansprüche, **dadurch gekennzeichnet, daß** die Kaschierklebemasse zusätzlich
C) mindestens eine monomere oder teilpolymerisierte, nieder- bis hochviskose, organisch (weiter-)polymerisierbare Substanz aufweist, vorzugsweise ausgewählt unter monomeren oder niedermolekularen Acrylaten, Methacrylaten, Epoxiden, Vinylalkoholen, Copolymeren der vorgenannten Substanzen und Styrol-Allylalkohol-Copolymeren oder Mischungen der vorgenannten Substanzen.

8. Kaschierklebemasse nach Anspruch 7, **dadurch gekennzeichnet, daß** die organisch polymerisierbare Substanz weiterhin durch eine oder mehrere Silangruppen modifiziert ist, die in das Netzwerk mit dem kondensierten Silan der Formel (I) einkondensierbar oder einkondensiert ist.

9. Kaschierklebemasse nach einem der voranstehenden Ansprüche, **dadurch gekennzeichnet, daß** der modifizierte Füllstoff organische Gruppen trägt, die mit organischen Gruppen der organisch reaktiven Substanz (C) und/oder mit Gruppen R¹ des Silans der Formel (I) copolymerisierbar sind.

10. Kaschierklebemasse nach einem der voranstehenden Ansprüche, **dadurch gekennzeichnet, daß** sie vollständig oder im wesentlichen durchkondensiert ist.

11. Verfahren zum Herstellen einer Kaschierklebemasse nach einem der voranstehenden Ansprüche, **dadurch gekennzeichnet, daß** mindestens ein Silan der Formel (I) (II) oder (III)wie in Anspruch 1 definiert, ggf. in Gegenwart weiterer Silane, oder ein Prekondensat der genannten Verbindungen, ggf. in Gegenwart weiterer Bestandteile, zumindest teilweise hydrolysiert und anorganisch kondensiert wird, **dadurch gekennzeichnet, daß** der modifizierte Füllstoff vor, während oder nach der Hydrolyse/Kondensation zugesetzt wird.

12. Verfahren nach Anspruch 11, **dadurch gekennzeichnet, daß** nach Abschluß der Kondensation niedersiedendes Lösemittel entfernt wird.

13. Verfahren nach Anspruch 11 oder 12, **dadurch gekennzeichnet, daß** der Mischung vor, während oder nach der (Teil)Hydrolyse und (-)Kondensation und ggf. nach Entfernen von niedersiedendem Lösemittel eine nieder- bis hochviskos-flüssige, mit Bestandteilen der Masse reaktionsfähige Substanz (C) wie in Anspruch 8 definiert zugegeben wird.

14. Verfahren zum Herstellen kaschierter Verbundsysteme, **dadurch gekennzeichnet, daß** eine Kaschierklebemasse wie in einem der Ansprüche 1 bis 10 definiert auf mindestens eine der zu verklebenden Oberflächen der zu kaschierenden Teile aufgebracht wird, zuvor oder sodann ggf. vorhandenes Lösungsmittel entfernt wird, und schließlich die zu verbindenden Teile miteinander kaschiert werden.

15. Verfahren nach Anspruch 14, **dadurch gekennzeichnet, daß** die organische Reaktionen eingehende(n) Gruppe(n) R¹ des Silans der Formel (I) und/oder die organisch reaktive Substanz (C), ggf. unter Einbringung weiterer Bestandteile, nach dem Aufbringen der Kaschierklebemasse auf die zu verklebenden Oberflächen und vor oder nach dem Kaschieren thermisch oder photochemisch polymerisiert oder copolymerisiert wird/werden.

16. Kaschiertes Verbundsystem, umfassend mindestens zwei miteinander kaschierte, insbesondere flächige Gegenstände, **dadurch gekennzeichnet, daß** die zu kaschierenden Teile mit Hilfe einer Kaschierklebemasse gemäß einem der Ansprüche 1 bis 10 verbunden sind, die gegebenenfalls thermisch oder photochemisch polymerisiert wurde.

## Claims

1. Laminating adhesive composition, obtainable from or using:
A) at least one silane of the formulae (I), (II) or (III)
XₐR_{b}SiR¹ _{4-a-b} (I)
[P]⁺ [XₐR_{b}SiR² _{4-a-b}]⁻ (II)
[XₐR_{b}SiR³ _{4-a-b}]⁺[Q]⁻ (III)
wherein
X is a hydrolysable group,
R is possibly substituted alkyl, alkenyl, aryl, alkylaryl or arylalkyl,
R¹ is an organic residue which is bound to the silicon via carbon and bears a group which can enter organic polymerisation reactions,
R² is an organic residue which bears a negative charge,
R³ is an organic residue which bears a positive charge,
[P]⁺ is an inorganic or organic cation,
[Q]⁻ is an inorganic or organic anion,
a is an integer between 1 and 3, and
b is an integer between 0 and 2,
at least in the case of formulae (II) and (III), a+b means 3,
by at least partial hydrolysis and condensation of the inorganic reactive groups present on the silane(s),
**characterised in that** the composition B) has at least one mineral, lamellar, modified filler which is selected from those fillers which are modified with the following reagents:
(a) reagents which can make available functionalities for a covalent bonding to the condensate as per (A) via inorganic condensation reactions,
(b) reagents which can make available organically polymerisable groups for an organic polymerisation reaction with the condensate as per (A),
(c) reagents which can make available both functionalities for a covalent bonding to the condensate as per (A) via inorganic condensation reactions and organically polymerisable groups for an organic polymerisation reaction with this condensate,
(d) reagents as per (a), (b) or (c) and in addition uncharged alkoxy silanes,
(e) zwitterionic reagents which give the filler charges which can go into ionic interaction with oppositely charged groups of the condensate as per (A), if this condensate was obtained using at least one silane of the formula (II) or (III),
(f) organic, silane-free ammonium compounds, the ammonium groups of which can be exchanged for groups of the condensate (A) which are charged in the same way, if said condensate was obtained using at least one of the silane of formula (II) (from claim 3), and
which can be either inorganically condensed and/or organically polymerised and/or bound by ionic bonding into the condensate as per (A), or which is either inorganically condensed and/or organically polymerised and/or bound by ionic bonding into the condensate as per (A).

2. Laminating adhesive composition according to claim 1, **characterised in that** the mineral, lamellar modified filler is a modified laminated silicate.

3. Laminating adhesive composition according to claim 1 or 2, **characterised in that** the mineral, lamellar filler is modified with organically modified silanes, organically modified isocyanates or organic onium compounds, preferably ammonium or phosphonium compounds and **in that** the filler can be or is condensed inorganically into the laminating adhesive composition.

4. Laminating adhesive composition according to one of the preceding claims, **characterised in that** the mineral filler is present in a quantity of 0.25-10 wt-%, preferably of 0.5-5 wt-%, relative to the total weight of the composition without solvent.

5. Laminating adhesive composition according to one of the preceding claims, wherein the indices of the silanes of the formulae (I) to (III) have the following meaning:
X is hydrogen, halogen, hydroxy, a possibly substituted alkoxy, acyloxy, alkylcarbonyl or alkoxycarbonyl group having preferably 1-10 carbon atoms in the alkyl or acyl group, NR⁴ with R⁴ equal to hydrogen, possibly substituted alkyl having preferably 1-10 carbon atoms or possibly substituted aryl,
R is a possibly substituted alkyl, alkenyl, aryl, alkylaryl or arylalkyl group having 1 to 10, preferably 1 to 6 alkyl carbons,
R¹ bears at least one amino, epoxide, vinyl or (meth)acrylate group which is preferably bonded to silicon via a group having a chain length of at least 4 atoms,
R² is an organic residue containing carboxylate groups,
R³ is an organic residue containing ammonium groups,
[P]⁺ is ammonium or a sodium or potassium ion,
[Q]⁻ is R⁵COO⁻ with R⁵ equal to low-alkyl, preferably methyl or C₂-C₄-alkyl or a halogen anion, preferably bromide or chloride.

6. Laminating adhesive composition according to claim 1 or 2 using at least one silane of formula (I) with a+b equal to 3.

7. Laminating adhesive composition according to one of the preceding claims, **characterised in that** it has in addition
C) at least one monomer or partially polymerised, low- to high-viscous, organically (further) polymerisable substance, preferably selected from monomer or low-molecular acrylates, methacrylates, epoxides, vinyl alcohols, copolymers of the above-mentioned substances and styrene-allyl alcohol copolymers or mixtures of the above-mentioned substances.

8. Laminating adhesive composition according to claim 7, **characterised in that** the organically polymerisable is further modified by one or more silane groups which can be or are condensed into the network with the condensed silane of formula (I).

9. Laminating adhesive composition according to one of the preceding claims, **characterised in that** the modified filler bears organic groups which can be copolymerised with organic groups of the organically reactive substance (C) and/or with groups R¹ of the silane of formula (I).

10. Laminating adhesive composition according to one of the preceding claims, **characterised in that** it is completely or substantially condensed.

11. Method for preparing a laminating adhesive composition according to one of the preceding claims, **characterised in that** at least one silane of formula (I), (II) or (III) as defined in claim 1, possibly in the presence of other silanes, or a pre-condensate of the above-mentioned compounds, possibly in the presence of other ingredients, is at least partially hydrolysed and inorganically condensed, **characterised in that** the modified filler is added before, during or after the hydrolysis/condensation.

12. Method according to claim 11, **characterised in that** low-boiling solvent is removed after termination of the condensation.

13. Method according to claim 11 or 12, **characterised in that** a low- to high-viscous liquid substance (C), as defined in claim 8 and capable of reacting with ingredients of the composition, is added to the mixture before, during or after the (partial) hydrolysis and (partial) condensation and possibly after the removal of low-boiling solvent.

14. Method for preparing laminated composite systems, **characterised in that** a laminating adhesive composition as defined in one of claims 1 to 10 is applied to at least one of the surfaces to be glued of the parts to be laminated, any solvent present is removed first or afterwards, and finally the parts to be connected are laminated to one another.

15. Method according to claim 14, **characterised in that** the group(s) R¹ of the silane of formula (I), which enter organic reactions, and/or the organically reactive substance (C), possibly with the introduction of further ingredients, is/are thermally or photochemically polymerised or copolymerised before the laminating adhesive composition is applied to the surfaces to be glued and before or after lamination.

16. Laminated composite system, comprising at least two, especially flat, objects laminated to one another, **characterised in that** the parts to be laminated are connected with the aid of a laminating adhesive composition according to one of claims 1 to 10, which has possibly been thermally or photochemically polymerised.

## Revendications

1. Composition pour couche adhésive que l'on peut obtenir à partir de ou en utilisant :
A) au moins un silane de formule (I), (II) ou (III),
XₐR_{b}SiR¹ _{4-a-b} (I)
[P]⁺[XₐR_{b}SiR² _{4-a-b}]⁻ (II)
[XₐR_{b}SiR³ _{4-a-b}]⁺[Q]⁻ (III)
dans lesquelles
X est un groupe hydrolysable,
R est un alkyle, un alcényle,un aryle, un alkylaryle ou un arylalkyle éventuellement substitué,
R¹ est un radical organique qui est lié au silicium par l'intermédiaire d'un atome de carbone et qui porte un groupe pouvant entrer dans des réactions de polymérisation organiques,
R² est un radical organique qui porte une charge négative,
R³ est un radical organique qui porte une charge positive,
[P]⁺ est un cation inorganique ou organique,
[Q]⁻ est un anion inorganique ou organique,
a est un nombre entier allant de 1 à 3 et
b est un nombre entier allant de 0 à 2,
au moins dans le cas des formules (II) et (III), a + b = 3,
par une hydrolyse au moins partielle et une condensation des groupes réactifs inorganiques présents sur le ou les silane(s),
**caractérisé en ce que**
la composition présente B au moins une charge minérale en forme modifiée de plaquette et choisie parmi les matières qui sont modifiées avec les réactifs suivants :
(a) les réactifs qui peuvent mettre à disposition des fonctionnalités pour une liaison covalente au produit de condensation selon (A) par l'intermédiaire de réactions de condensation inorganiques,
(b) des réactifs qui peuvent mettre à disposition des groupes polymérisables par voie organique pour une réaction de polymérisation organique avec le produit de condensation selon (A),
(c) des réactifs qui peuvent mettre à disposition aussi bien des fonctionnalités pour une fixation covalente sur le produit de condensation selon (A) par l'intermédiaire de réactions de condensation inorganiques, que des groupes polymérisables par voie organique pour une réaction de polymérisation organique avec ce produit de condensation,
(d) des réactifs selon (a), (b) ou (c) et en outre des alcoxysilanes non chargés,
(e) des réactifs hermaphrodites qui confèrent au produit de remplissage des charges qui peuvent entrer en interaction ionique avec des groupes de charge contraire du produit de condensation selon (a) lorsque celui-ci a été obtenu en faisant appel à au moins un silane de formule (II) ou (III),
(f) des composés d'ammonium organiques sans silane dont les groupes ammonium peuvent être échangés contre des cations de même charge du produit de condensation (A), lorsque celui-ci a été obtenu en faisant appel à au moins un silane de formule (II) (de la revendication 3), et
la charge peut être soit condensée dans le produit de condensation selon (A) par voie inorganique, et/ou peut être intégrée par une polymérisation organique et/ou peut être liée par une liaison ionique, ou qui est intégrée par condensation inorganique dans le produit de condensation selon (A) et/ou intégrée par une polymérisation organique et/ou liée par une liaison ionique.

2. Composition pour couche adhésive selon la revendication 1,
**caractérisée en ce que**
la charge minérale en forme de plaquette, modifiée est un silicate stratifié modifié.

3. Composition pour couche adhésive selon la revendication 1 ou 2,
**caractérisée en ce que**
la charge minérale en forme de plaquette est modifiée avec des silanes à modification organique, des isocyanates à modification organique ou des composés d'onium organiques, de préférence des composés d'ammonium ou de phosphonium, et est intégrable ou intégrée par condensation par voie inorganique dans la composition pour couche adhésive.

4. Composition pour couche adhésive selon l'une des revendications précédentes,
**caractérisée en ce que**
la charge minérale est présente en quantité de 0,25 à 10 % en poids, de préférence de 0,5 à 5 % en poids, par rapport au poids total de la composition sans solvant.

5. Composition pour couche adhésive selon l'une des revendications précédentes, dans laquelle les indices des silanes de formules (I) à (III) ont la signification suivante :
X représente un hydrogène, un halogène, un hydroxy, un groupe alcoxy, acyloxy, alkylcarbonyle ou alcoxy carbonyle éventuellement substitué comportant de préférence de 1 à 10 atomes de carbone dans le groupe alkyle ou acyle, NR⁴ où R⁴ représente un hydrogène, un alkyle éventuellement substitué comportant de préférence de 1 à 10 atomes de carbone ou un aryle éventuellement substitué,
R est un groupe alkyle, alcényle, aryle, alkylaryle ou arylalkyle éventuellement substitué comportant de 1 à 10, de préférence de 1 à 6 atomes de carbone d'alkyle,
R¹ porte au moins un groupe amino, époxyde, vinyle ou (méth)acrylate, qui est lié de préférence au silicium par l'intermédiaire d'un groupe ayant une longueur de chaîne d'au moins quatre atomes,
R² est un radical organique contenant des groupes carboxylates,
R³ est un radical organique contenant des groupes ammonium,
[P]⁺ est l'ammonium ou un ion sodium ou potassium,
[Q]⁻ représente R⁵COO⁻ où R⁵ représente un alkyle inférieur, de préférence un méthyle ou un alkyle en C₂ à C₄, ou un anion halogène, de préférence le bromure ou le chlorure.

6. Composition pour couche adhésive selon la revendication 1 ou 2, utilisant au moins un silane de formule (I), dans laquelle a + b = 3.

7. Composition pour couche adhésive selon l'une des revendications précédentes,
**caractérisée en ce que**
la composition pour couche adhésive présente en outre
(C) au moins une substance monomère ou partiellement polymérisée, faiblement visqueuse à hautement visqueuse, polymérisable (plus avant) par voie organique, de préférence choisie parmi les acrylates, méthacrylates, époxydes, alcools vinyliques ou copolymères monomères ou de faible poids moléculaire des substances mentionnées ci-dessus et les copolymères styrène-alcool allylique ou les mélanges des substances mentionnées ci-dessus.

8. Composition pour couche adhésive selon la revendication 7,
**caractérisée en ce que**
la substance polymérisée par voie organique est en outre modifiée par un ou plusieurs groupes silanes qui est ou sont intégrables ou intégrés par condensation dans le réseau avec le silane condensé de formule (I).

9. Composition pour couche adhésive selon l'une des revendications précédentes,
**caractérisée en ce que**
la charge modifiée porte des groupe organiques qui sont copolymérisables avec les groupes organiques de la substance organiquement réactive (C) et/ou avec des groupes R¹ du silane de formule (I).

10. Composition pour couche adhésive selon l'une des revendications précédentes,
**caractérisée en ce qu'**
elle est entièrement condensée ou pour l'essentiel condensée.

11. Procédé de fabrication d'une composition pour couche adhésive selon l'une des revendications précédentes,
**caractérisé en ce qu'**
on hydrolyse au moins en partie au moins un silane de formule (I), (II) ou (III) tel que défini dans la revendication 1, le cas échéant en présence d'autres silanes, ou un pré-produit de condensation des composés mentionnés, le cas échéant en présence d'autres constituants, et
on le condense par voie inorganique, et
la charge modifiée est ajoutée avant, pendant ou après l'hydrolyse/condensation.

12. Procédé selon la revendication 11,
**caractérisé en ce qu'**
après la fin de la condensation on élimine le solvant à bas point d'ébullition.

13. Procédé selon la revendication 11 ou 12,
**caractérisé en ce qu'**
on ajoute au mélange avant, pendant ou après l'hydrolyse et la condensation (éventuellement partielles), et le cas échéant après élimination du solvant à bas point d'ébullition, une substance (C) liquide faiblement à hautement visqueuse, réactive avec les constituants de la composition, et telle que définie dans la revendication 8.

14. Procédé de fabrication de systèmes composites revêtus,
**caractérisé en ce qu'**
on dépose une composition pour couche adhésive telle que définie dans l'une des revendications 1 à 10 sur au moins une des surfaces adhésives des parties à enduire,
on élimine auparavant ou ensuite le solvant éventuellement présent, et enfin on revêt l'une avec l'autre les parties à relier.

15. Procédé selon la revendication 14,
**caractérisé en ce que**
le ou les groupes R¹ du silane de formule (I) entrant dans des réactions organique et/ou la substance à réaction organique (C) est ou sont polymérisés ou copolymérisés, le cas échéant avec apport d'autres constituants, après dépôt de la composition pour couche adhésive sur les surfaces à coller et/ou après revêtement, en utilisant un moyen thermique ou photochimique.

16. Système composite revêtu comprenant au moins deux objets revêtus l'un par l'autre, en particulier plats,
**caractérisé en ce que**
les pièces à revêtir sont reliées à l'aide d'une composition pour couche adhésive selon l'une des revendications 1 à 10, qui le cas échéant a été polymérisée par un moyen thermique ou photochimique.
